# EUROPEAN PATENT APPLICATION

(11) **EP 3 109 205 A1**
(43) Date of publication of application: **28.12.2016**
(21) Application number: 15769160.1
(22) Date of filing: 25.03.2015
(51) Int. Cl.: C03B 7/01

(54) **GOB PRODUCTION APPARATUS**

(30) Priority: 26.03.2014 JP 2014063461
(71) Applicant: Nihon Yamamura Glass Co., Ltd., Amagasaki-shi, Hyogo 660-8580 (JP)
(72) Inventor: TANAKA, Naohiro, Amagasaki-shi Hyogo 660-8580 (JP); KAWAHARA, Ryusuke, Amagasaki-shi Hyogo 660-8580 (JP)
(74) Representative: Manitz, Finsterwald & Partner GbR
(86) International application number: PCT/JP2015/059146
(87) International publication number: WO 2015/147065

(57) **Abstract**

A gob forming device for forming a gob that is fed into a mold for molding a glass product after adjusting the gob to an optimum weight and shape, the gob forming device comprising:
one or two cameras 71,72 configured to capture one or more images of a gob in the falling path of the gob, the gob being obtained by cutting molten glass extruded from a circular orifice 11 of a gob feeder 1;
an image processor 70 configured to perform image processing to measure the weight of the gob and feature values of the gob based on the one or more 2-D images of the gob captured by the one or two cameras, the feature values defining the shape of the gob, the weight and the feature values being measured by approximating the shape of the gob's cross section in the direction perpendicular to the longitudinal direction as a circle or ellipse and;
drive mechanisms 40, 50, and 64 to 66 configured to individually drive respective adjustment mechanisms to adjust the gob to achieve a desired weight and shape;
a storage device configured to store, as reference data, a standard weight of the gob and an optimum value of each of the feature values of the gob; and
a control device 8 configured to drive the drive mechanisms 40, 50, and 64 to 66 so that the drive mechanisms operate to ensure that the difference between the weight of the gob measured by the image processor 70 and the corresponding reference data stored in the storage device is an acceptable value and the differences between the feature values of the gob measured by the image processor 70 and the corresponding reference data stored in the storage device are acceptable values.

## Description

### Technical Field

The present invention relates to a gob forming device for forming a mass of molten glass called a "gob," which is fed into a mold for forming glass products, such as glass bottles. The present invention particularly relates to a gob forming device for forming a gob by adjusting the gob to achieve an optimum weight and shape.

### Background Art

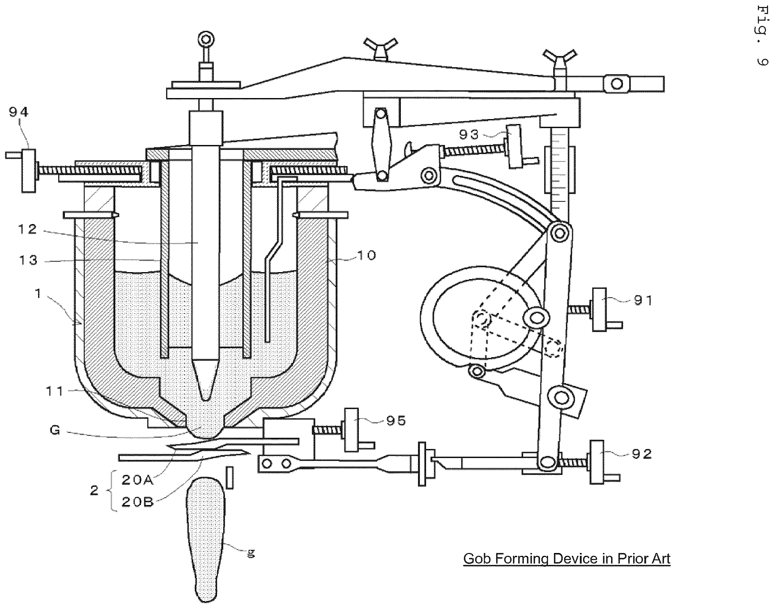

As shown in Fig. 9, conventional gob forming devices comprise a gob feeder 1 having a circular orifice 11 provided at the bottom of a spout 10 for storing molten glass G and a cutter mechanism 2 having shear blades 20A,20B located below the orifice 11. Inside the spout 10, a tube 13 is rotatably provided. Inside the tube 13, a plunger 12 is provided operably in the vertical direction. As the plunger 12 ascends from the bottom dead center to the top dead center, and then descends from the top dead center, the molten glass G inside the spout 10 is extruded from the orifice 11 and hangs down in a cylindrical shape. Immediately after the plunger 12 reaches the bottom dead center and in turn starts to ascend, the cutter mechanism 2 operates. This causes the shear blades 20A,20B to cut off the molten glass G hanging from the orifice 11, thereby forming a gob g. The gob g falls downward, and such gobs are sorted out into multiple sections of a bottle manufacturing machine by a delivery means such as a scoop, a trough, or a deflector, and guided into blank molds.

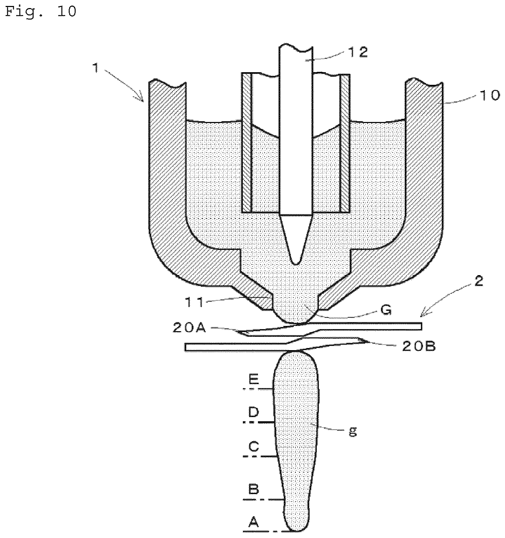

Fig. 10 illustrates a typical shape of the gob g formed by the up-and-down operation of the plunger 12. The front edge of the gob g denoted as A in Fig. 10 is formed when the plunger 12 ascends at an accelerated rate. The neck part of the gob g denoted as B is formed when the plunger 12 ascends slowly. The central part of the body of the gob g denoted as C is formed when the plunger 12 remains stationary at the top dead center. The rear part of the body of the gob g denoted as D is formed when the plunger 12 slowly descends. The rear end portion of the gob g denoted as E is formed when the plunger 12 descends at an accelerated rate.

The formation of the gob g is an important process that significantly affects the quality of glass products. In molding a glass product, the gob g needs to be adjusted so that the gob g has an optimum weight and shape. To do so, the differential, the height and stroke of the plunger 12, the height of the tube 13, the height of the shear blades 20A,20B, and the like are adjusted. As used here, the "differential" refers to the timing gap (phase) between the start of ascent of the plunger 12 and the cutting operation of the shear blades 20A,20B. Conventionally, such adjustments have been made by a worker, for example, operating a handle 91 for adjusting the differential, a handle 92 for adjusting the height of the plunger 12, a handle 93 for adjusting the stroke of the plunger 12, a handle 94 for adjusting the height of the tube 13, a handle 95 for adjusting the height of the shear blades 20A,20B, and the like.

However, the manual adjustments require a skillful worker. Even if a worker always makes adjustments in the same manner, it is difficult to form gobs with a uniformly optimum shape because of the influence of changes in conditions and of the worker's sense. Even if a gob with an optimum shape for molding a glass product is formed, it is not easy to reproduce a gob with the same shape by manual adjustments in the next production of the same type of glass product. Thus, an enormous amount of experience is required for the adjustments to form a gob with an optimum shape. Such adjustments are time-consuming and place a heavy burden on the worker.

To solve these problems, Patent Literature 1 proposes, for example, a quality control device. This quality control device observes a falling gob with three cameras, measures 3-D (three-dimensional) coordinate data of the entire surface of the gob by image processing, calculates the weight, length, thickness, and other dimensions of the gob from the 3-D coordinate data, and evaluates the quality of the gob from the calculation results to thereby control the setup conditions for operational factors.

### Citation List

### Patent Literature

Patent Literature 1: WO2003/008348

### Summary of Invention

### Technical Problem

However, the quality control device disclosed in Patent Literature 1 stereoscopically views a falling gob to detect the spatial position of the gob. Thus, the device requires three cameras to stereoscopically view the gob. It also requires complex software for image processing, thus increasing equipment expenses. In addition, the computing process to obtain 3-D coordinate data of the entire surface of the gob is time-consuming, which makes it difficult to perform high-speed processing.

The present invention was completed with a focus on these problems, and an object of the invention is to provide a gob forming device that enables automatic adjustment of a gob to an optimum shape without the need for skill and experience. Another object of the invention is to provide a gob forming device that enables high-speed processing by measuring the weight of the gob and the feature values of the gob that define the shape of the gob, based on a 2-D (two-dimensional) image captured by a small number of cameras.

### Solution to Problem

The gob forming device according to the present invention forms a gob that is fed into a mold for molding a glass product after adjusting the gob to an optimum weight and shape, and the gob forming device comprises:
one or two cameras configured to capture one or more images of a gob in the falling path of the gob, the gob being obtained by cutting molten glass extruded from a circular orifice of a gob feeder;
an image processor configured to perform image processing to measure the weight of the gob and feature values of the gob based on the one or more 2-D images of the gob captured by the one or two cameras, the feature values defining the shape of the gob, the weight and the feature values being measured by approximating the shape of the gob's cross section in the direction perpendicular to the longitudinal direction as a circle or ellipse and;
drive mechanisms configured to individually drive respective adjustment mechanisms to adjust the gob to achieve a desired weight and shape;
a storage device configured to store, as reference data, a standard weight of the gob and an optimum value of each of the feature values of the gob; and
a control device configured to drive the drive mechanisms so that the drive mechanisms operate to ensure that the difference between the weight of the gob measured by the image processor and the corresponding reference data stored in the storage device is an acceptable value and the differences between the feature values of the gob measured by the image processor and the corresponding reference data stored in the storage device are acceptable values.

In molding a glass product by forming a gob using the gob forming device of the configuration above, an adjustment procedure for adjusting the gob to an optimum weight and shape is performed before molding a glass product. In this adjustment procedure, the molten glass extruded from the orifice of the gob feeder is cut off, and a gob is formed. One or two cameras capture one or two images of the formed gob when the gob is falling down, and the one or two captured 2-D images of the gob are loaded into the image processor.

Because the orifice of the gob feeder has a circular shape, the gob formed of cylindrically extruded molten glass has a cross section of a substantially true circle shape in the direction perpendicular to the longitudinal direction, and the diameter of the gob is substantially uniform at any point on the entire circumference. If the diameter of the gob is not uniform on the entire circumference, the cross section of the gob has an elliptical shape with a slight difference between the major axis and the minor axis. The image processor performs the following image processing: when one camera is provided, the image processor approximates the shape of the cross section of the gob as a circle based on a single 2-D image, whereas, when two cameras are provided, the image processor approximates the shape of the cross section of the gob as an ellipse based on two 2-D images; the image processor then measures the weight (volume) of the gob, and the feature values of the gob that define the shape of the gob.

As reference data, the storage device stores the standard value of the weight of the gob and the optimum value of each feature value of the gob. The control device drives a corresponding drive mechanism so that the difference between the weight or feature value measured by the image processor and the corresponding reference data stored in the storage device becomes a predetermined acceptable value. When a gob with an optimum shape has been obtained in molding glass products, the weight of the gob and the feature values that define the optimum shape of the gob are stored in the storage device as reference data. This enables the reproduction of a gob with an optimum shape when the same glass product is molded the next time.

In a preferable embodiment of the present invention, the image processor divides the image of the gob into the front half part and the rear half part, and then further divides the front half part and the rear half part into front half parts and rear half parts. On the basis of the gob image, the image processor then measures the entire length, the maximum diameter of the rear-most part of the divided four parts, and the ratio of the diameter of the front end to the diameter of the rear end of the second part from the front as feature values.

In this embodiment, the shape of the gob is defined by the entire length, the maximum diameter of the rear-most part of the divided four parts, and the ratio of the diameter of the front end to the diameter of the rear end of the second part from the front. For example, when the diameter of the front end of the second part from the front is substantially the same as that of the rear end of the second part, the gob has a column-like shape. When the diameter of the front end of the second part from the front is smaller than that of the rear end of the second part, the gob has a tapered shape. The entire length of the gob can be changed by adjusting the height of the shear blades. The maximum diameter of the rear-most part of the divided four parts can be changed by adjusting the differential. The ratio of the diameter of the front end of the second part from the front to the diameter of the rear end of the second part can be changed by adjusting the stroke of the plunger and the bottom dead center of the plunger. These adjustments enable the adjustment of the shape of the gob.

In a preferable embodiment of the present invention, when the difference between the measured weight of the formed gob and the reference data is not an acceptable value, the control device drives the corresponding drive mechanism to adjust the weight of the gob. When the difference between any of the measured feature values of the gob formed after the previous adjustment and the corresponding reference data is not an acceptable value, the control device drives the corresponding drive mechanism to adjust the shape of the gob. The control device is provided with a control procedure so that the adjustments are repeated until the difference between the measured weight of the gob formed after the previous adjustment and the reference data and the differences between the measured feature values of the gob formed after the previous adjustment and the reference data all become acceptable values.

In this embodiment, when the weight of the gob is changed by the adjustment of the shape of the gob, the weight of the gob is adjusted again. Further, when the shape of the gob is changed by the re-adjustment of the weight of the gob, the shape of the gob is adjusted again. Because adjustments are repeated in this manner, the gob can be adjusted to achieve an optimum weight and shape.

In a preferable embodiment of the present invention, the drive mechanisms include a drive mechanism configured to drive a mechanism for adjusting the height of the tube provided inside the spout of the gob feeder in order to adjust the weight of the gob, a drive mechanism configured to drive a mechanism for adjusting the height of the shear blades to cut off molten glass extruded from the gob feeder in order to adjust the length of the gob, a drive mechanism configured to drive a mechanism for adjusting the stroke and bottom dead center of the plunger provided inside the spout of the gob feeder in order to adjust the thickness of the gob, and a drive mechanism configured to drive a mechanism for adjusting the timing gap between the start of ascent of the plunger and the cut-off of the gob by the shear blades. Each drive mechanism uses as a driving source a motor whose drive is controlled by the control device.

In this embodiment, the mechanism for adjusting the height of the tube provided inside the spout of the gob feeder is driven by a motor of the corresponding drive mechanism. This changes the weight of the gob. The mechanism for adjusting the height of the shear blades is driven by a motor of the corresponding drive mechanism. This changes the length of the gob. The mechanism for adjusting the stroke and bottom dead center of the plunger provided inside the spout of the gob feeder and the mechanism for adjusting the timing gap between the start of ascent of the plunger and the cut-off of the gob by the shear blades are driven by a motor of the corresponding drive mechanism. This changes the thickness of the gob.

### Advantageous Effects of Invention

The present invention enables the formation of a gob with an optimum weight and shape by automatic adjustment without the need for skill and experience. Thus, the adjustments needed before molding glass products can be performed in a short time without requiring manual operation, thus substantially lightening the workload on a worker. When a gob with an optimum shape has been formed in molding a glass product, a gob with the same shape as the former gob can be easily reproduced in molding the same glass product the next time. In addition, based on one or two 2-D images captured by one or two cameras, the shape of the cross section of the gob is approximated as a circle or ellipse, and then the weight of the gob and the feature values that define the shape of the gob are measured. Thus, the software for image processing does not have to be complex, and thus equipment expenses are reduced, while high-speed processing is achieved.

### Brief Description of Drawings

Fig. 1 is an explanatory diagram illustrating a schematic configuration of a gob forming device in an embodiment of the present invention.
Fig. 2 is a plan view illustrating a specific example of shear blades.
Fig. 3 is a block diagram illustrating a specific configuration of the gob forming device shown in Fig. 1.
Fig. 4 is an explanatory diagram illustrating a configuration of a mechanism for adjusting the height of shear blades and a drive mechanism for the height adjustment mechanism.
Fig. 5 is a plan view illustrating the positions of two cameras with respect to a gob.
Fig. 6 is an explanatory diagram illustrating the relation between the outline of an elliptical-shaped cross section of a gob and the outline of the cross section of a gob that has been approximated as an ellipse.
Fig. 7 is an explanatory diagram illustrating an example of the feature values that define the shape of a gob.
Fig. 8-1 is a flow chart illustrating a flow of the control procedure for adjusting the gob to an optimum weight and shape.
Fig. 8-2 is a flow chart following the flow chart of Fig. 8-1.
Fig. 9 is an explanatory diagram illustrating a mechanism showing the configuration of a gob forming device of a conventional configuration.
Fig. 10 is a view illustrating the relation between the up-and-down operation of the plunger and the shape of a gob.

### Description of Embodiments

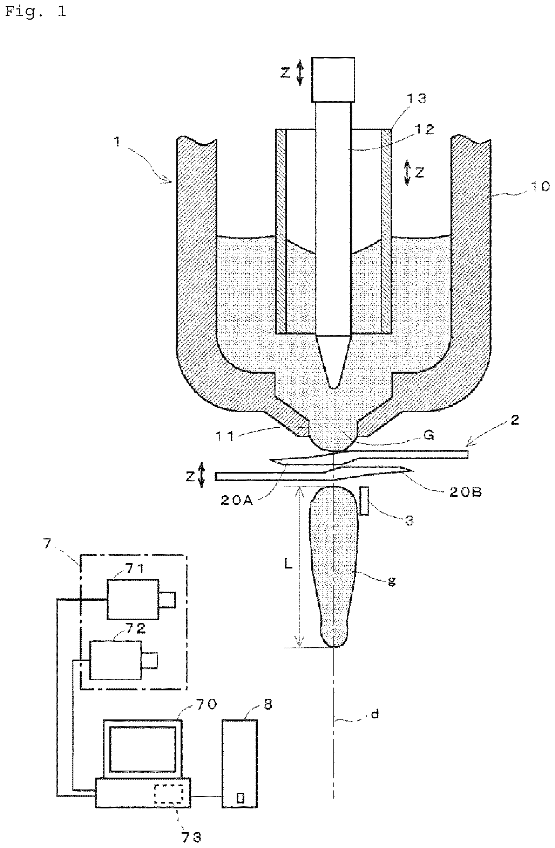

Fig. 1 illustrates a schematic configuration of a gob forming device in an embodiment of the present invention. The gob forming device shown in Fig. 1 forms gobs g to be sequentially fed into blank molds provided in a plurality of sections of a bottle manufacturing machine, and includes a gob feeder 1 and a cutter mechanism 2. The gob feeder 1 is provided with a spout 10 for storing molten glass G that is guided from a glass fusing furnace (not shown). At the bottom center of the spout 10, a circular orifice 11 is formed. From this orifice 11, the molten glass G is extruded and cylindrically hangs from the orifice 11.

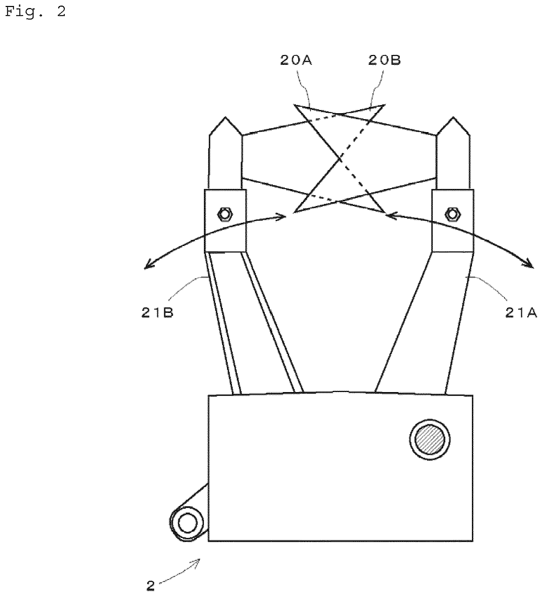

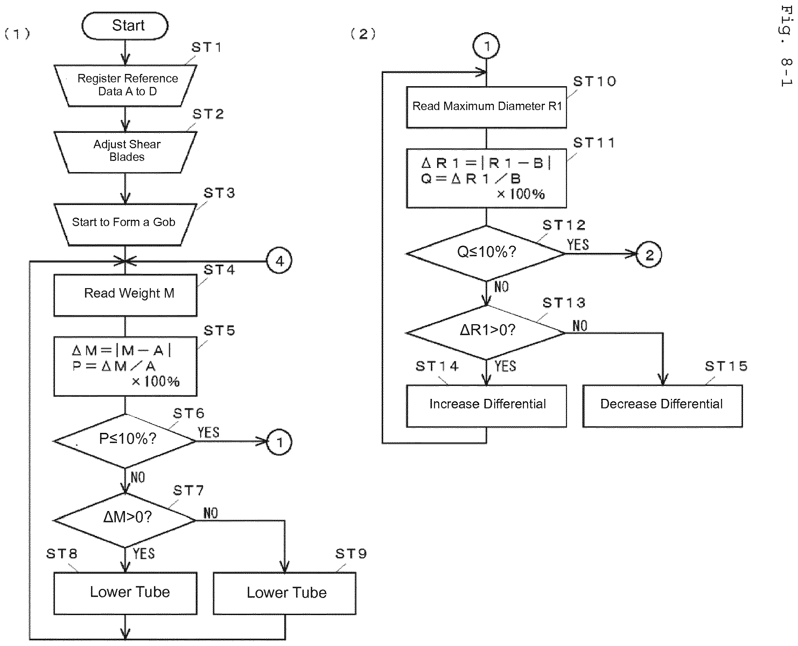

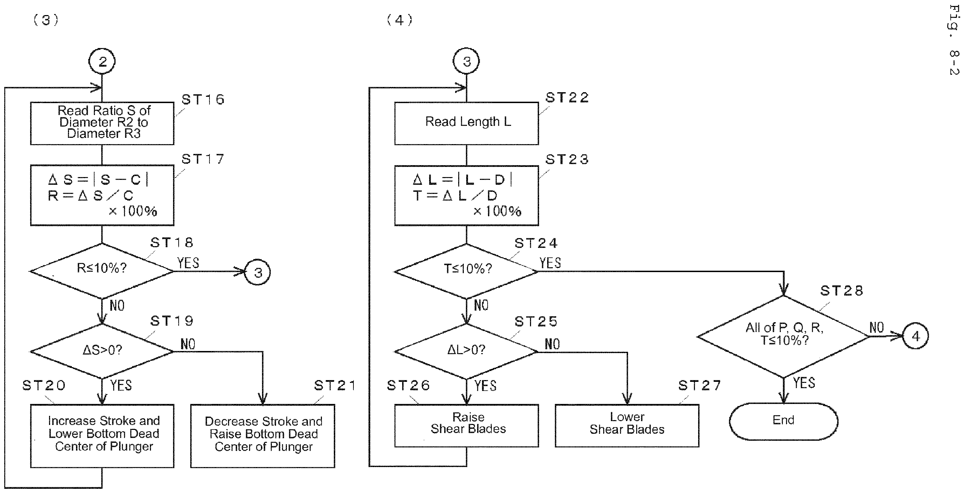

Below the orifice 11, two shear blades 20A,20B composing the cutter mechanism 2 are provided. As shown in Fig. 2, the shear blades 20A,20B in this embodiment are attached to the tips of two arms 21A,21B capable of opening and closing in such a manner that the blade edges face each other. When the arms 21A,21B turn in the closing direction on the base end as a pivot, the shear blades 20A,20B overlap one another and move forward with the blade edges facing each other. This cuts off the molten glass G cylindrically hanging from the orifice 11 between the shear blades 20A,20B, thereby forming a rod-shaped gob g. Each arm 21A,21B is driven to open or close by a cutter-drive mechanism (not shown). The degree of overlap of the shear blades 20A,20B (the amount of the overlapping area and the tension) is adjusted when the adjustment procedure shown in Fig. 8 is performed before molding a glass product. The control procedure shown in Fig. 8 is described later.

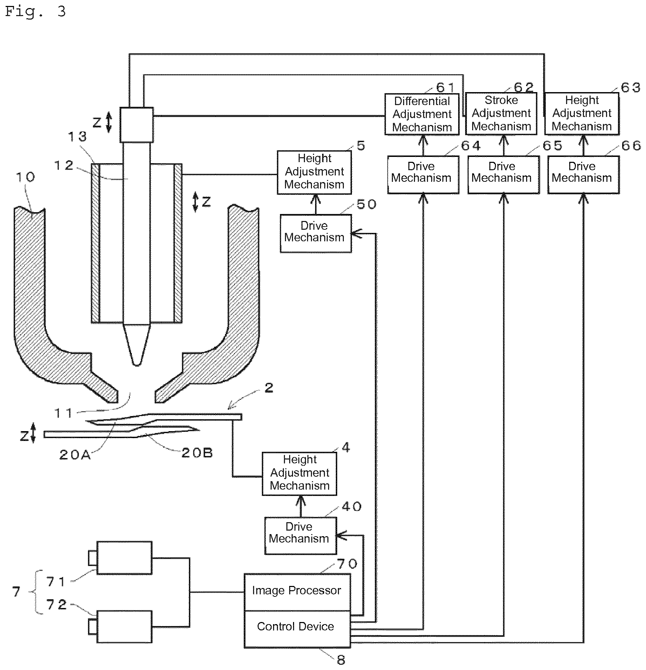

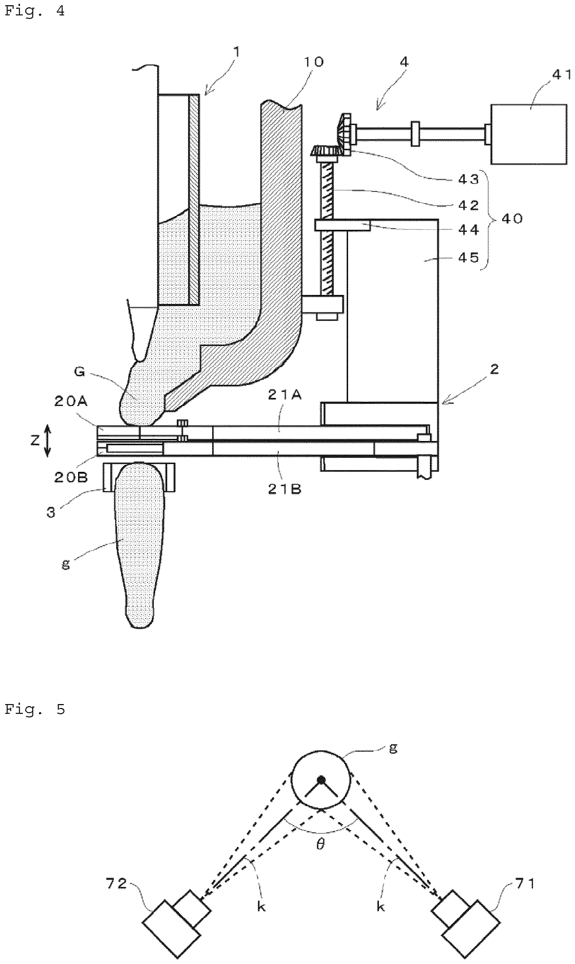

Below the shear blades 20A,20B, a guiding member 3 is provided. This guiding member 3 controls the swing of the molten glass G to adjust the disposition of the falling gob g when the molten glass G is cut off. The height of the shear blades 20A,20B of the cutter mechanism 2 is adjusted by the height adjustment mechanism 4 shown in Figs. 3 and 4. This height adjustment mechanism 4 is driven by a drive mechanism 40 that uses a motor as a driving source, and the height adjustment mechanism 4 displaces the shear blades 20A,20B in the upward direction to allow the shear blades 20A,20B to approach the orifice 11 and in the downward direction to allow the shear blades 20A,20B to move away from the orifice 11 (the upward and downward directions are shown by arrow z in the figures). This adjusts the height of the shear blades 20A,20B. The length of the gob g varies depending on the height of the shear blades 20A,20B.

Inside the spout 10 of the gob feeder 1, the tube 13 is rotatably provided. Inside this tube 13, the plunger 12 is provided in a vertically movable manner. The height of the tube 13 is adjusted by a height adjustment mechanism 5. The height adjustment mechanism 5 for the tube 13 is driven by a drive mechanism 50 that uses a motor as a driving source. Displacing the tube 13 in the vertical direction z enables the adjustment of the height of the tube 13. The weight of the gob g varies depending on the height of the tube 13.

The molten glass G is extruded from the orifice 11 by the downward movement of the plunger 12 and hangs down from the orifice 11. The hanging molten glass G is sucked into the orifice 11 by the upward movement of the plunger 12. The plunger 12 reaches the bottom dead center and turns upward; immediately after this moment, the cutter mechanism 2 is activated at a predetermined time. Fig. 1 illustrates a state immediately after the molten glass G hanging from the orifice 11 has been cut off by the shear blades 20A,20B of the cutter mechanism 2.

The shape of the gob g varies depending on the aforementioned differential, the stroke of the plunger 12, and the bottom dead center of the plunger 12. The differential is adjusted by a differential adjustment mechanism 61. The stroke of the plunger 12 is adjusted by a stroke adjustment mechanism 62. The bottom dead center of the plunger 12 is adjusted by a height adjustment mechanism 63. The adjustment mechanisms 61,62,63 are driven by respective drive mechanisms 64,65,66, which use their respective motors as a driving source.

Fig. 4 illustrates, as an embodiment of the adjustment mechanisms, a specific configuration of the height adjustment mechanism 4 for adjusting the height of the shear blades 20A,20B and the drive mechanism 40 for the height adjustment mechanism. Because other adjustment mechanisms are also known, their illustration and description are omitted here.

The height adjustment mechanism 4 shown as an example includes a drive mechanism 40 that uses a motor 41, such as a stepping motor rotatable in the forward or reverse direction, as a driving source. The drive mechanism 40 displaces the shear blades 20A,20B in the vertical direction z only by the distance commensurate with the angle of the rotation of the motor 41 (the number of rotations). The stepping motor rotates by the angle commensurate with the number of supplied driving pulses.

The drive mechanism 40 shown as an example includes a feed screw 42, a gear mechanism 43 for conveying the rotation of the motor 41 to the feed screw 42, and a nut member 44. The nut member 44 is moved on the feed screw 42 in the vertical direction z in accordance with the rotation of the feed screw 42 in either forward or reverse direction. The shear blades 20A,20B of the cutter mechanism 2 are horizontally held by a shear box 45 that is integrated with the nut member 44.

The shear blades 20A,20B are displaced in either upward or downward direction, and the amount of displacement is equal to the distance over which the nut member 44 travels on the feed screw 42 in the downward or upward direction. The travel distance of the nut member 44 is determined by the number of rotations of the feed screw 42. The number of rotations of the feed screw 42 is determined by the angle of the rotation (the number of rotations) of the motor 41. The displacement direction of the shear blades 20A,20B is determined by the rotational direction of the motor 41. The amount of displacement of the shear blades 20A,20B is determined by the angle of the rotation (the number of rotations) of the motor 41.

When a gob g is formed by cutting off the molten glass G by the shear blades 20A,20B, the length L of the gob g is adjusted by the distance between the orifice 11 and the shear blades 20A,20B, i.e., the height of the shear blades 20A,20B. When the height of the shear blades 20A,20B is set as shown in Fig. 1, in order to increase the length L of the gob g, the shear blades 20A,20B are displaced in the downward direction to increase the distance from the orifice 11. To shorten the length of the gob g, the shear blades 20A,20B are displaced in the upward direction to decrease the distance from the orifice 11.

The relation between the amount of displacement of the shear blades 20A,20B and the amount of change in the length L of the gob g can be obtained by experiments beforehand, and the result is arranged in a table. When the length L of the gob g has been obtained by a measurement operation by the image processor 70 described later, the amount of displacement of the shear blades 20A,20B is determined from the difference between the measured length L of the gob g and the optimum value of the length L of the gob g with reference to the table. From the amount of displacement, the angle of the rotation (the number of rotations) of the motor 41 can be calculated.

With reference back to Fig. 1, an imaging device 7 is provided near the falling path d of the gob g below the orifice 11. The imaging device 7 includes two cameras 71,72. The cameras 71,72 are disposed at the same height. In this embodiment, as shown in Fig. 5, the cameras 71,72 are positioned away from each other at an angle θ of 90 degrees at an equal distance k from the falling path of the gob g. These two cameras 71,72 capture images of a falling gob g simultaneously at a different angle, and obtain two 2-D images. For the cameras 71,72, for example, CCD cameras are used. To obtain the entire image of the falling gob g, the cameras 71,72 are positioned so that space that includes the entire view of the gob g comes within the field of the cameras' vision. The angle θ is not limited to 90 degrees. The distance from the falling path to each camera 71,72 (i.e., distance k) is not necessarily equal, because the images captured by the cameras 71,72 can be compensated to those captured at an equal distance.

The cameras 71,72 are connected to the image processor 70. When a timing system (not shown) outputs a trigger signal to the image processor 70, the cameras 71,72 each capture an image of the gob g at the same timing. The 2-D images of the gob g captured by the cameras 71,72 are loaded to the image processor 70. The timing system outputs a trigger signal at the moment the cutter mechanism 2 has cut off the hanging molten glass G. The timing system is configured to generate and output a signal for instruction for the timing of activation or deactivation of each mechanism so that various mechanisms composing the gob forming device and a bottle manufacturing machine operate in a predetermined order.

The image processor 70 approximates the shape of the cross section of the gob g as an ellipse based on the two 2-D images loaded from the cameras 71,72, and integrates the area of the ellipse over the entire length of the gob g to measure the volume of the gob g. Further, the image processor 70 calculates the weight of the gob g from the volume and the specific gravity of the gob g. The image processor 70 measures the length of the gob g, the maximum diameter of the rear end part of the gob g, the diameter at the center of the length of the gob g, and the diameter of the front end part of the gob g based on one of the two 2-D images as multiple feature values that define the shape of the gob, and also calculates the ratio of the diameter of the front end part to the diameter at the center of the length of the gob g.

Because the orifice 11 of the gob feeder 1 has a circular shape close to a true circle, the molten glass G extruded from the orifice 11 and the gob g formed from the molten glass G cut by the shear blades 20A,20B have a cylindrical shape. Thus, when the gob g is cut crosswise in the direction perpendicular to the longitudinal direction, the cross section of the gob g has a shape close to a true circle at any point of the entire length. If the diameter of the cross section of the gob g is substantially uniform at any point on the entire circumference, the imaging device 7 is configured with a single camera. Then, the shape of the cross section of the gob g is approximated as a circle based on the 2-D image captured by the camera, and the area of the circle is integrated over the entire length of the gob g to measure the volume of the gob g.

In this embodiment, when the gob g is cut crosswise in the direction perpendicular to the longitudinal direction, the shape of the cross section of the gob g is an ellipse at any point of the entire length. In addition, because the orifice 11 has a circular shape close to a true circle, the ellipse is considered to be close to a circle; i.e., the difference between the major axis and the minor axis of the ellipse is small. In this case, the imaging device 7 is configured with two cameras 71,72, and the shape of the cross section of the gob g is approximated as an ellipse based on the two 2-D images captured by the cameras 71,72. The area of the ellipse is then integrated over the entire length to measure the volume of the gob g.

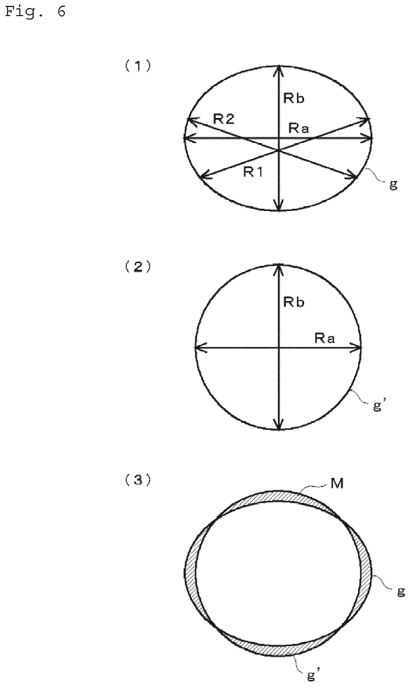

Fig. 6 (1) illustrates the outline of a gob g cut crosswise in the direction perpendicular to the longitudinal direction. In Fig. 6 (1), Ra denotes the major axis of the ellipse, and Rb denotes the minor axis of the ellipse. In Fig. 6 (1), R1 denotes the diameter of the gob g measured based on a 2-D image captured by shooting the gob g by one camera 71. R2 denotes the diameter of the gob g measured based on a 2-D image captured by shooting the gob g by the other camera 72 at a different angle.

Fig. 6 (2) illustrates the shape of a gob g' approximated as an ellipse by applying the diameters R1 and R2 of the gob g captured by the two cameras 71,72 as the major axis Ra and the minor axis Rb. As shown in Fig. 6 (1), when images of the gob g are captured at a symmetrical angle with respect to the axis center line of the gob g, the diameter R1 (major axis Ra) and the diameter R2 (minor axis Rb) are substantially the same. The outline forms a shape close to a circle, and the difference in the shape between the circle and the ellipse shown in Fig. 6 (1) becomes the largest.

In Fig. 6 (3), the outline of the gob g shown in Fig. 6 (1) is superposed on the outline of the gob g' shown in Fig. 6 (2) (measurement data). In Fig. 6 (3), the region M marked with diagonal lines indicates the errors of the area. In Fig. 6 (3), the major axis Ra of the ellipse of Fig. 6 (1) is larger, and the minor axis Rb of the ellipse of Fig. 6 (2) is larger. Thus, the errors are offset, and the both gobs have substantially the same area. This means that the both gobs have substantially the same volume, and that the error in measurement of volume (weight) that occurs in approximation to an ellipse is minor.

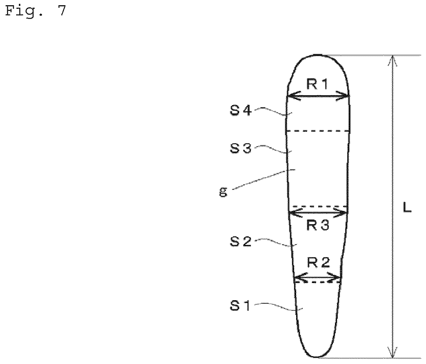

In this embodiment, as shown in Fig. 7, the image processor 70 divides a 2-D image of a gob g captured by one of the two cameras 71,72 into the front half part and the rear half part, and further divides the front half part and the rear half part into front half parts and rear half parts, which gives four parts S1 to S4. The image processor 70 then measures the length L of the gob g, the maximum diameter R1 of the rear-most part S4 of the gob g, and the ratio of the diameter R2 of the front end of the second part S2 from the front to the diameter R3 of the rear end of the second part S2 of the gob g, as individual feature values. The 2-D image captured by the other camera may also be measured in the same manner, and the average of each of the measurement values of the two 2-D images of the gob g may be determined as the entire length L and the diameters R1 to R3.

The image processor 70 includes a storage device 73 as shown in Fig. 1. This storage device 73 stores the standard value for the weight of gob g corresponding to the weight of a glass product and the optimum value of each feature value of gob g for individual glass products to be molded; i.e., the storage device 73 stores, as reference data, the optimum value of the entire length L of gob g, the optimum value of the maximum diameter R1 of the rear-most part S4 of gob g, and the optimum value of the ratio of the diameter R2 of the front end of the second part S2 from the front to the diameter R3 of the rear end of the second part S2. The reference data stored in the storage device 73 are preferably feature values obtained by measuring a gob having an optimum shape that has been formed in molding a glass product. This enables the reproduction of the previously formed gob g with an optimum shape in the next molding of the same glass product.

The control device 8 reads the weight and feature values of the gob g measured by the image processor 70, and compares the weight and feature values with corresponding reference data stored in the storage device 73. The control device 8 then drives the respective drive mechanisms 40, 50, and 64 to 66 of the adjustment mechanisms 4, 5, and 61 to 63 so that the differences between the measured values and the reference data all become a predetermined acceptable value.

The control device 8 is composed of a microcomputer, which includes, although not shown, a CPU mainly for control and computation, and a storage device for storing programs and data. The CPU is connected via a bus to the image processor 70 and motors included in the drive mechanisms 40, 50, and 64 to 66.

The image processor 70 is also composed of a microcomputer, which also includes a CPU mainly for control and computation, a storage device for storing programs and data, and an image memory for storing 2-D images loaded from the cameras 71,72. As reference data, the storage device 73 stores the standard value of the weight and the optimum value of each feature value of the gob for individual glass products.

Before molding a glass product, adjustments for forming a gob g with an optimum weight and shape are performed. In this adjustment procedure, the CPU of the image processor 70 executes a program for image processing stored in the storage device to approximate the shape of the cross section of the gob g in the direction perpendicular to the longitudinal direction as an ellipse based on 2-D images of the gob g captured by two cameras 71,72, measure the volume of the gob g, and multiply the measured value with the specific gravity to determine the weight of the gob g.

The CPU of the image processor 70, based on one 2-D image, measures the entire length L of the gob g, the maximum diameter R1 of the rear-most part S4 of the divided four parts S1 to S4 shown in Fig. 7, and the ratio of the diameter R2 of the front end of the second part S2 from the front to the diameter R3 of the rear end of the second part S2 as feature values.

After receiving the measurement results obtained by the image processor 70, the control device 8 performs operations for adjustment to form a gob g with an optimum weight and shape in accordance with the control procedure shown in Fig. 8.

Figs. 8-1 and 8-2 illustrate a control procedure that is performed by the control device 8 before molding a glass product. In Figs. 8-1 and 8-2, "ST" is an abbreviation of "STEP" that indicates each step in the control procedure. In ST1 in Fig. 8-1 (1), the control device 8 reads, from the storage device 73 in the image processor 70, the standard value A of the weight of gob g corresponding to the weight of a glass product, the optimum value of each feature value, i.e., the optimum value B of the maximum diameter R1 of the rear-most part S4 of gob g, the optimum value C of the ratio of the diameter R2 of the front end of the second part S2 from the front to the diameter R3 of the rear end of the second part S2, and the optimum value D of the entire length L of gob g as reference data, and records the data in the internal storage device.

In the next ST2, the degree of overlap of the shear blades 20A,20B (the amount of the overlap and the tension) is adjusted, and then the gob forming device starts to form a gob g (ST 3). When gobs g formed one after another by the gob feeder 1 are falling down over the falling path d, the two cameras 71,72 capture the image of a falling gob g. After the 2-D images captured by the cameras 71,72 are loaded into the image processor 70, the image processor 70 measures the volume M of the gob g, the maximum diameter R1 of the rear-most part S4 of the divided four parts S1 to S4, the ratio S of the diameter R2 of the front end of the second part S2 from the front to the diameter R3 of the rear end of the second part S2, and the entire length L of the gob g.

In ST4, the control device 8 reads the measured data of the weight M from the image processor 70, and in the next ST5, the control device 8 calculates the difference ΔM between the weight M and the standard value A of weight, and also calculates the percentage P of the difference ΔM relative to the standard value M. In the next ST6, the control device 8 determines whether the percentage P is a predetermined acceptable value; in this embodiment, the control device 8 determines whether the percentage P is 10% or less, and when the answer is "No," the control device 8 determines in the next ST7 which is smaller or larger, the value of the weight M or the standard value A, based on whether the difference ΔM is positive or negative. When ΔM>0, the answer in ST7 is "Yes," and the control device 8 drives the drive mechanism 50 for the height adjustment mechanism 5 of the tube 13 to lower the tube 13 by a predetermined height (ST 8). When ΔM<0, the answer in ST7 is "No," and the control device 8 drives the drive mechanism 50 to raise the tube 13 by a predetermined height (ST 9).

When the height of the tube 13 has been changed in ST8 or ST9, the control device 8 waits for a suitable time period, then reads from the image processor 70 the measurement data of the weight M of a gob g formed at a later time (ST 4), and performs calculation and control of the weight M in the same manner as described above. The control procedure of ST4 to ST9 is repeated until the answer "Yes" is obtained in ST6. When the answer in ST6 is "Yes," the operation proceeds to ST10 in Fig. 8-1 (2).

In ST10 in Fig. 8-1 (2), the control device 8 reads the measurement data of the maximum diameter R1 of the rear-most part S4 of the gob g from the image processor 70, and in the next ST 11, the control device 8 calculates the difference ΔR1 between the maximum diameter R1 and the optimum value B, and also calculates the percentage Q of the difference ΔR1 relative to the optimum value B. In the next ST12, the control device 8 determines whether the percentage Q is a predetermined acceptable value; in this embodiment, the control device 8 determines whether the percentage Q is 10% or less, and when the answer is "No," the control device 8 determines which is smaller or larger, the maximum diameter R1 or the optimum value B, based on whether the difference ΔR1 is positive or negative (ST 13). When ΔR1>0, the answer in ST13 is "Yes." The control device 8 then drives the drive mechanism 64 for the differential adjustment mechanism 61 to increase the differential by a predetermined amount (ST14). When ΔR1<0, the answer in ST13 is "No." The control device 8 then drives the drive mechanism 64 to decrease the differential by a predetermined amount (ST15).

When the differential has been changed in ST14 or ST15, the control device 8 waits for a suitable time period, then reads from the image processor 70 the measurement data of the maximum diameter R1 of a gob g formed at a later time (ST 10), and performs calculation and control of the maximum diameter R1 in the same manner as described above. The control procedure of ST10 to ST15 is repeated until the answer "Yes" is obtained in ST12. When the answer in ST12 is "Yes," the operation proceeds to ST16 in Fig. 8-2 (3).

In ST16 in Fig. 8-2 (3), the control device 8 reads from the image processor 70 the measurement data of the ratio S of the diameter R2 of the front end of the second part S2 from the front to the diameter R3 of the rear end of the second part S2 of the gob g, and in the next ST 17, the control device 8 calculates the difference ΔS between the ratio S of the diameters and the optimum value C, and also calculates percentage R of the difference ΔS relative to the optimum value C. In the next ST18, the control device 8 determines whether the percentage R is a predetermined acceptable value; in this embodiment, the control device 8 determines whether the percentage R is 10% or less, and when the answer is "No," the control device 8 determines which is smaller or larger, the ratio S of the diameters or the optimum value C, based on whether the difference ΔS is positive or negative (ST 19). When ΔS>0, the answer in ST19 is "Yes." The control device 8 then drives the drive mechanism 65 for the stroke adjustment mechanism 62 of the plunger 12 to increase the stroke of the plunger 12 by a predetermined amount and drives the drive mechanism 66 for the height adjustment mechanism 63 of the plunger 12 to lower the bottom dead center of the plunger 12 by a predetermined amount (ST20). When ΔS<0, the answer in ST20 is "No." The control device 8 then drives the drive mechanisms 65,66 to decrease the stroke of the plunger 12 by a predetermined amount and raise the bottom dead center of the plunger 12 (ST21).

When the stroke and the bottom dead center of the plunger 12 have been changed in ST20 or ST21, the control device 8 waits for a suitable time period, then reads from the image processor 70 the measurement data of the ratio S of the diameter R2 of the front end of the second part S2 from the front to the diameter R3 of the rear end of the second part S2 of a gob g formed at a later time (ST16), and performs calculation and control of the ratio S of the diameters in the same manner as described above. The control procedure of ST16 to ST21 is repeated until the answer "Yes" is obtained in ST18. When the answer in ST18 is "Yes," the operation proceeds to ST22 in Fig. 8-2 (4).

In ST22 shown in Fig. 8-2 (4), the control device 8 reads the measurement data of the length L of the gob g from the image processor 70, and in the next ST23, the control device 8 calculates the difference ΔL between the length L and the optimum value D, and also calculates the percentage T of the difference ΔL relative to the optimum value D. In the next ST24, the control device 8 determines whether the percentage T is a predetermined acceptable value; in this embodiment, the control device 8 determines whether the percentage T is 10% or less, and when the answer is "No," the control device 8 determines which is smaller or larger, the length L or the optimum value D, based on whether the difference ΔL is positive or negative (ST25). When ΔL>0, the answer in ST25 is "Yes." The control device 8 then drives the drive mechanism 40 for the height adjustment mechanism 4 of the shear blades 20A,20B to raise the shear blades 20A,20B by a predetermined amount (ST26). When ΔL<0, the answer in ST25 is "No." The control device 8 then drives the drive mechanism 40 to lower the shear blades 20A,20B by a predetermined amount (ST27).

When the height of the shear blades 20A,20B has been changed in ST26 or ST27, the control device 8 waits for a suitable time period, then reads from the image processor 70 the measurement data of the length L of a gob g formed at a later time (ST22), and performs calculation and control of the length L in the same manner as described above. The control procedure of ST22 to ST27 is repeated until the answer "Yes" is obtained in ST24. When the answer in ST24 is "Yes," the operation proceeds to ST28. The control device 8 determines whether all of the percentages P, Q, R, and T are their predetermined acceptable values. In this embodiment, the control device 8 determines whether the percentages P, Q, R, and T are 10% or less.

When any of the percentages P, Q, R, and T is not an acceptable value, and the corresponding adjustment operation is performed, the answer in ST28 is "No." The operation goes back to ST4 in Fig. 8-1 (1), and the control device 8 reads sequentially the weight M of the gob g, the maximum diameter R1 of the rear-most part S4 of the gob g, the ratio S of the diameter R2 of the front end to the diameter R3 of the rear end of the second part S2 from the front, and the entire length L of the gob g, and performs the same procedure described above.

The control procedure in ST4 to ST27 is repeated until the answer "Yes" is obtained in ST28. When the answer in ST28 is "Yes" (i.e., all of the percentages P, Q, R, and T are their predetermined acceptable values, and thus there is no need for adjustment operation), the adjustment procedure is ended. Then, the operation proceeds to molding of a glass product.

### Description of the Reference Numerals

- 1: Gob feeder
- 2: Cutter mechanism
- 4: Height adjustment mechanism for shear blades
- 5: Height adjustment mechanism for a tube
- 7: Imaging device
- 8: Control device
- 11: Orifice
- 12: Plunger
- 20A,20B: Shear blades
- 40,50,64,65,66: Drive mechanisms
- 61: Differential adjustment mechanism
- 62: Stroke adjustment mechanism for a plunger
- 63: Height adjustment mechanism for a plunger
- 70: Image processor
- 71,72: Cameras
- 73: Storage device
- g: Gob
- G: Molten glass

## Claims

1. A gob forming device for forming a gob that is fed into a mold for molding a glass product after adjusting the gob to an optimum weight and shape, the gob forming device comprising:
one or two cameras configured to capture one or more images of a gob in the falling path of the gob, the gob being obtained by cutting molten glass extruded from a circular orifice of a gob feeder;
an image processor configured to perform image processing to measure the weight of the gob and feature values of the gob based on the one or more 2-D images of the gob captured by the one or two cameras, the feature values defining the shape of the gob, the weight and the feature values being measured by approximating the shape of the gob's cross section in the direction perpendicular to the longitudinal direction as a circle or ellipse;
drive mechanisms configured to individually drive respective adjustment mechanisms to adjust the gob to achieve a desired weight and shape;
a storage device configured to store, as reference data, a standard weight of the gob and an optimum value of each of the feature values of the gob; and
a control device configured to drive the drive mechanisms so that the drive mechanisms operate to ensure that the difference between the weight of the gob measured by the image processor and the corresponding reference data stored in the storage device is an acceptable value and the differences between the feature values of the gob measured by the image processor and the corresponding reference data stored in the storage device are acceptable values.

2. The gob forming device according to claim 1, wherein the image processor divides the gob image into the front half part and the rear half part, further divides the front half part and the rear half part into front half parts and rear half parts, and measures, based on the gob image, the entire length, the maximum diameter of the rear-most part of the divided four parts, and the ratio of the diameter of the front end of the second part from the front to the diameter of the rear end of the second part as the feature values.

3. The gob forming device according to Claim 1, wherein the control device is provided with a control procedure stating that
when the difference between the measured weight of the formed gob and the reference data is not an acceptable value, the control device drives the corresponding drive mechanism to adjust the weight of the gob;
when the differences between the measured feature values of the gob formed after the adjustment and the corresponding reference data are not respective acceptable values, the control device drives the corresponding drive mechanisms to adjust the shape of the gob; and
the control device repeats the adjustments until the difference between the measured weight of the gob formed after the adjustment and the corresponding reference data and the differences between the measured feature values of the gob formed after the adjustment and the corresponding reference data all become respective acceptable values.

4. The gob forming device according to claim 1, wherein the drive mechanisms include:
a drive mechanism configured to drive a mechanism for adjusting the height of a tube provided inside a spout of the gob feeder in order to adjust the weight of the gob;
a drive mechanism configured to drive a mechanism for adjusting the height of shear blades to cut off molten glass extruded from the gob feeder in order to adjust the length of the gob; and
a drive mechanism configured to drive a mechanism for adjusting the stroke and bottom dead center of a plunger provided inside the spout of the gob feeder in order to adjust the thickness of the gob, and a drive mechanism configured to drive a mechanism for adjusting the timing gap between the start of ascent of the plunger and the cut-off of the gob by the shear blades,
wherein each drive mechanism uses as a driving source a motor whose drive is controlled by the control device.
